# EUROPEAN PATENT SPECIFICATION

(11) **EP 4 134 544 B1**
(45) Date of publication and mention of the grant of the patent: **18.09.2024**
(21) Application number: 21191755.4
(22) Date of filing: 17.08.2021
(51) Int. Cl.: F03D 80/50

(54) **SEALING DEVICE AND METHOD FOR PERFORMING WIND TURBINE BLADE MAINTENANCE IN AN ENCLOSED ENVIRONMENT**
DICHTUNGSVORRICHTUNG UND VERFAHREN ZUR DURCHFÜHRUNG DER WARTUNG VON WINDFLÜGELN EINER WINDENERGIEANLAGE IN EINER GESCHLOSSENEN UMGEBUNG
DISPOSITIF D'ÉTANCHÉITÉ ET PROCÉDÉ D'EXÉCUTION DE MAINTENANCE DE PALE D'ÉOLIENNE DANS UN ENVIRONNEMENT CLOS

(30) Priority: 11.08.2021 PT 2021117393
(43) Date of publication of application: 15.02.2023
(73) Proprietor: Eptune Engineering Lda, 4450-718 Matosinhos (PT)
(72) Inventor: SOARES LOUREIRO, Joao Pedro, 4450-590 Matosinhos (PT); ALVES CARDOSO, Cristovão, 2405-018 Maceira LRA (PT); CARDOSO CARNEIRO, Pedro Miguel, 4615- 175 Amarante (PT)
(74) Representative: Patentree

(56) References cited:
- WO-A1-2020/058099
- DE-A1- 102010 011 365
- US-A1- 2015 204 193
- US-A1- 2019 257 295

## Description

### Technical field

The present disclosure relates to a sealing device and method that allows to perform wind blade maintenance, including repairs and inspection, in an enclosed environment, in particular having a floor, a wall and a roof for creating an enclosed environment. The interior area where blade maintenance and inspection are taking place can be isolated from water and entry of gases, thus creating a barrier to the exterior where humidity and temperature can be controlled.

### Background

The wind turbine blade repair and maintenance business are highly seasonal due to the mild weather requirements, necessary to perform some of the necessary procedures. This limitation significantly impacts not only the maintenance costs but also the wind turbine availability to produce energy. This limitation brings inefficiency to the business and some companies and inventors have been trying, for some years, to create a solution that significantly improves the state of the art.

Most of the proposed solutions envision suspended platforms on the hub or suspended on a mobile crane, in which one or more operators are installed to perform the inspection, maintenance or repair. More recently, some of these suspended platforms include a habitat/tent to create an enclosed environment that cover the suspended platform on top with a roof on bottom with a floor (in some cases) and vertically with walls, to shelter the operator from the outside environment. These habitats tend to be flexible or rigid structures that cover the blade locally.

Most inventions fail in having a credible solution that can actually create a closed interface/sealing between the habitat and the blade. This unsolved issue has a major impact on the functionality of the existing solutions.

The existing interface solutions between the habitat/tent and the blade are not air and watertight, jeopardizing the usage of this solution under rain, snow and other adverse weather conditions and the respective possibility to have an air conditioning system that allows to control humidity and temperature of the habitat's interior volume.

Document GB2550842A discloses an apparatus comprising a temporary enclosure which isolates a small area of a blade surface which needs repair, where the enclosure has a transparent portion and includes holes through which the operator hands may access the work area. Due to the nature of the present disclosure can be suitable for exceedingly small repairs once the system design creates a barrier between the operator and the blade which highly restricts the operator accessibility to areas larger than 500x500 mm. The solution is designed to only sustain the weight of this light and small enclosure add-on. Furthermore, this apparatus cannot be used on curved shapes with low radius of curvature. The proposed sealing cross section is mentioned to be rigid and not to collapse due to vacuum forces, which renders it impossible to contour the curved shapes of a blade airfoil section. If the sealing cross section has some kind of elasticity and is forced to curve, the circular cross section would immediately collapse under the existing bending forces and deform the shape of the sealing in such a way that the suction function would be lost due to the deformation of the flanges. The bore would restrain significantly the air flow on the system, or even be deformed in such a way that would choke it completely. In addition, the invention does not propose a credible solution to cover the trailing edge of the blade or how to avoid water ingression on that area.

The inventions presented for gap sealing on EP17804798A and EP2957538A1 are remarkably similar. The proposed functions are the same, the difference being that on EP17804798A a tensioning element is used to reduce water agglutination, whereas on EP2957538A1 it is not. Both solutions use a concept of discrete suction cups that press a strip of a sealing element against the blade, creating a barrier between the outer side of the blade and the work area of the operator below this sealing. This solution leads to discrete sealing pressure areas that do not assure an even pressure along the sealing. Due to this, it is possible that the water trickling down the blade can ingress between suction cups, jeopardizing the sealing function. Furthermore, these inventions do not describe in detail how they solve the gaps that result from the application of a roof design, that is separated in blade upper surface and lower surface, on the leading and trailing edge of the blade.

Document DE19909698A1 proposes a complete blade repair platform and habitat. It includes a solution for the interface between the habitat and the blade, using a hose that is pressed to the blade surface by means of sliding plungers actuated pneumatically, hydraulically, magnetically or electrically. This solution creates similar difficulties to the ones stated previous inventions. Furthermore, it is not clear how this system would accommodate differences on the blade airfoil shape. For example, when the blade cross section is close to a circle, it is not clear if and how the sliding plungers can accommodate the blade's large airfoil thicknesses.

Document WO2020058099 presents a water intrusion prevention system to be mounted on a turbine blade. The solution proposed comprises a collar fixed to the blade by means of a tape or a similar component, and an umbrella-like membrane that is attached to this device. This attachment is performed under a tissue in excess to avoid water egression on the attachment line. The potential use of this solution can be compromised by the tape ability to withstand high load, the long tape installation time, possible damages of the adhesive to the blade, dust accommodation and because it is a consumable solution.

Document DE102010011365A1, for which the preamble of claim 1 relates, relates to weather protection for work platforms on propeller blades of wind turbines. D1 discloses a weather protection which, if necessary, is inflated to form a roof with the aid of a fan, the weather protection consisting of at least two elements which accommodate the propeller blade between them. For this purpose, it is provided that in a conventional work platform, which consists of a U-shaped floor element and a surrounding parapet, at least one receiving device is attached to the part of the parapet facing away from the floor element on the shorter sides of the work platform, on which the weather protection is in a rest position e.g. B. is attached folded. From an economic point of view, it makes sense to leave the elements attached to an element fastener even when they are not in use.

In summary, the main problems identified on the prior art are the following. The sealing solutions do not contour the blade completely and if they do, the contact force of interface sealing is not strong and uniform enough, allowing water to egress. The sealing solutions do not create a continuous vacuum interface between a blade and the sealing. The sealing solutions do not sustain the roof or floor wet mass, rain and the aerodynamic load on the roof or floor.

### General Description

A sealing device according to the present invention is characterised by the features recited in the characterising portion of claim 1. A method for applying a sealing device for sealing against a wind turbine blade to perform maintenance, repair or inspection on said blade in an enclosed environment of a blade repair platform and a blade repair platform comprising the sealing device, are characterised by the features also recited in the characterising portion of claim 1.

Sealing is one of the key elements to achieve a successful solution to perform blade maintenance in all-weather conditions. The main concern is to achieve a solution in which an interface sealing device, created between a habitat and the wind turbine blade, could successfully achieve the desired result that previous solutions could not.

The present disclosure relates to a sealing device and method that is flexible, impermeable and can carry significant load, for performing wind blade maintenance, including repairs and inspections, in an enclosed environment, preferably a sealed environment, possibly with a different (higher) air pressure in respect of the exterior.

This intends to solve the technical problem associated with the different perimeters and shapes of the blade airfoil, that can have an infinite number of different shapes; namely concave and/or convex, very low or high leading-edge radius along the blade span, small and large cord lengths. The sealing in here proposed has the ability to adapt to this infinitude of shapes.

The disclosure is advantageous in providing a sealing system that is simple and uses few parts. The disclosed sealing is cost-effective, simple to assemble and, as previously stated, can adapt to a plurality of shapes. The disclosure also allows to control the interface between the habitat/tent and the blade, not jeopardizing maintenance under rain, snow, high temperature and other adverse weather or atmospheric conditions, including humidity and dryness. This solution is improved due to a series of functionalities first because of the high flexibility of the sealing device. The present disclosure can seal the blade around the entire cross section of the blade and serve as an attachment point for superior or inferior surface of platform enclosing habitat.

In an embodiment, the sealing cross section can be defined to have one or more suction channels, which are connected to the suction system through a suction pipe, in one or more locations. The sealing cross section creates a linear and continuum vacuum in a closed volume that runs around the blade, ensuring that the sealing imposes a uniform pressure around the complete blade boundary. The vacuum is not limited to the airfoil cross section contour i.e. it can be presented in the remaining extension of the sealing device keeping a pressure difference between the sealing device and the exterior in its full length.

This suction allows a significant contact pressure between the sealing and the blade, creating a strong interface that prevents water ingression, with the additional advantage of, if by any chance, a small amount of water passes through the outside layer of the seal - which is unlikely - it will be sucked through the system, serving as a redundant safety system.

In an embodiment, the sealing has, along its length, one or more longitudinal suction interfaces that establish the desired suction flow. This is performed by attaching flexible pipes to an interface plugging system that should not have leaks. The suction interface is defined in such a way that the vacuum is distributed along the suction cavity keeping the desired pressure and velocity in the sealing and piping extension.

The present disclosure is designed to fulfil a series of characteristics, as per example a load carrying capability in all sealing directions, generated by the existence of pressure differential between the sealing cavity and the exterior along the complete sealing system.

The disclosed sealing device can be used as interface between wind blade and habitats or tents that are used for wind blade maintenance, repair and inspection.

The habitat's membrane roof can be attached to the sealing device in a multitude of embodiments; sewed, bonded, zipped, welded.

In an embodiment, the roof is an impermeable elastic membrane made of very flexible materials that can distend various times the original length. The flexibility allows the roof to adjust to the blade cross section shape, while the elasticity maintains in plane tension in the membrane that enforces the roof flatness in order to achieve a specific angle in the entire roof for water drainage.

The present disclosure also relates to a method of applying said sealing device to a wind turbine blade, sealing it and allowing the maintenance to be performed in an enclosed environment.

It is disclosed a sealing device for attaching and sealing against a wind turbine blade to perform maintenance, repair or inspection on said blade in an enclosed environment of a blade suspended platform, comprising: a bendable support band for attaching along a length of a flexible roof or floor membrane for covering said enclosed environment; two longitudinal sealing elements attached along a length of the support band, for sealing against a surface of the wind turbine blade and for defining a longitudinal suction cavity between the support band, said sealing elements and the blade.

In an embodiment, the sealing elements and support band are arranged to apply a negative relative pressure in the longitudinal cavity for fixing the sealing device to the blade and supporting the roof or floor induced loads on the sealing.

In an embodiment, the sealing device further comprising an air-tight connection for connecting between the longitudinal suction cavity and a vacuum pump or turbine, in particular the air-tight connection being a suction pipe.

In an embodiment, said vacuum pump or turbine can be connected to said air-tight connection.

According to the present invention, the support band is bendable around a transversal axis of the support band to conform to the blade cross sectional shape.

In an embodiment, the support strip is less bendable around a longitudinal axis of the support strip than bendable around a transversal axis of the support strip to sustain vacuum pressure and keeping the suction cavity open.

In an embodiment, the sealing device comprising an additional longitudinal sealing element, attached along a length of the support band, for sealing against the wind turbine blade and for defining an additional longitudinal suction cavity between the support band, one of the two longitudinal sealing elements, the additional longitudinal sealing element, and the blade, in particular comprising a communicating channel between the first suction cavity and the additional suction cavity to allow pressure equalization between them.

In an embodiment, the roof or floor membrane is attached along the middle of the support band.

In an embodiment, one or more add-on stoppers for sealing gaps between the blade and the sealing device, in particular made with sealing foam, neoprene, silicone.

In an embodiment, comprising a plurality of pressure sensors arranged along said suction cavity for detecting pressure and an electronic data processor configured for determining the sealing device is fixed to the blade when pressure differential along the sealing device is below a predetermined pressure threshold.

It is also described a blade repair platform comprising a suspended platform, an enclosed environment and the sealing device according to any of the previous claims wherein the roof or floor membrane is arranged to protect the enclosed environment from water or snow ingression, and entry of outside air.

In an embodiment, the roof or floor surrounds the blade repair platform and/or the roof or floor is arranged to surround the wind blade and the blade repair platform.

In an embodiment, the blade repair platform comprising one or more articulated beams for supporting the roof or floor membrane.

In an embodiment, the sealing device, platform and roof, or floor, are arranged to surround a cross-section of the blade, in particular fully surrounding a cross-section of the blade.

In an embodiment, the blade repair platform, the sealing device, platform and roof, or floor, are arranged to seal the enclosed environment in respect of an exterior of the wind turbine to form a sealed environment for controlling the humidity and temperature.

In an embodiment, the sealed environment is arranged to provide a positive differential air pressure in respect of the exterior of the wind turbine, in particular the sealed environment is air-tight.

It is also described a method for applying a sealing device for sealing against a wind turbine blade to perform maintenance, repair or inspection on said blade in an enclosed environment of a blade repair platform, the sealing device comprising: a flexible roof or floor membrane for covering said enclosed environment; a bendable support band; and two longitudinal sealing elements according to any embodiments, the method comprising: fitting two longitudinal sealing elements attached along the a length of the support band for sealing against the wind turbine blade and for defining a longitudinal suction cavity between the support band, said sealing elements and the blade.

In an embodiment, the method further comprising using an air-tight connection to connect between the suction cavity and a vacuum pump or turbine for applying a negative relative pressure for fixing the sealing device to the blade.

In an embodiment, the method further comprising, for installing the sealing device, the steps of applying a first flow rate with a first pressure for accommodating leaks and fixing of the sealing device; when the sealing device is fixed to the blade, applying a second flow rate with a second pressure for increasing load carrying capability of the sealing device; wherein the first flow rate is higher than the second flow rate, and the first pressure differential created is lower than the second pressure differential.

### Brief Description of the Drawings

The following figures provide preferred embodiments for illustrating the description and should not be seen as limiting the scope of invention.
**Figure 1** is a schematic representation of a sealing cross section, where:
   **1** represents a support band;
   **2** represents a flexible sealing element for contacting with the blade;
   **3** represents one or more vacuum cavities;
   **4** represents a blade surface;
   **5** represents a roof.
**Figure 2** is a schematic representation of a sealing top view when bended.
**Figure 3** is a schematic representation of a sealing top view around airfoil section of the blade, where:
   **6** represents the sealing.
**Figure 4** is a schematic representation of a sealing top view around circular/ellipse section of the blade.
**Figure 5** is a front perspective view of a detail of a small edge opening, where:
   **7** represents an edge opening.
**Figure 6** is a front perspective view of an add-on stopper, where:
   **8** represents an embodiment trailing edge;
   **9** represents a second embodiment of a trailing edge for the mating of the sealing trap when it makes close to 90 degrees angles with the blade's surface;
   **10** represents a third embodiment to increase the bending radius locally.
**Figure 7** is a schematic representation of a sealing device with axis drawings, where:
   **A** represents a longitudinal axis;
   **B** represents a transversal axis.

### Detailed Description

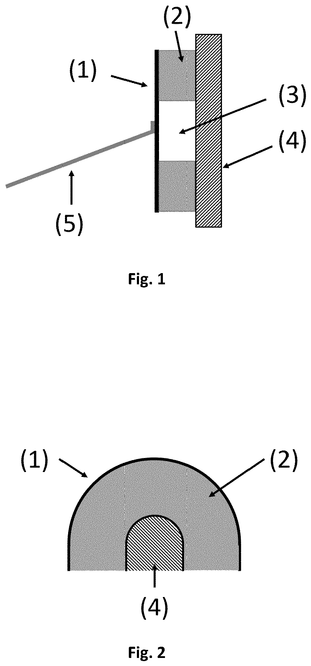

The present disclosure comprises a sealing cross section that is defined to have one or more suction channels, which are connected to the suction turbine through a suction pipe, in one or more locations, to manage the desired pressure difference between the sealing suction channel and outside sealing pressure. This design comprises a support band **1 (****Figure 1****)** made by a semi-rigid material, such as a polymer or other (PVC, Nylon, Acrylic, Aluminium), this structural element shall be able to contour the small blade leading edge radius without breaking. The support band material, geometry and dimensions are defined to bend and develop a small curvature radius on the longitudinal direction that allows it to easily contour the blade air foil shape while in the transversal direction it will have a minor bending under the vacuum load.

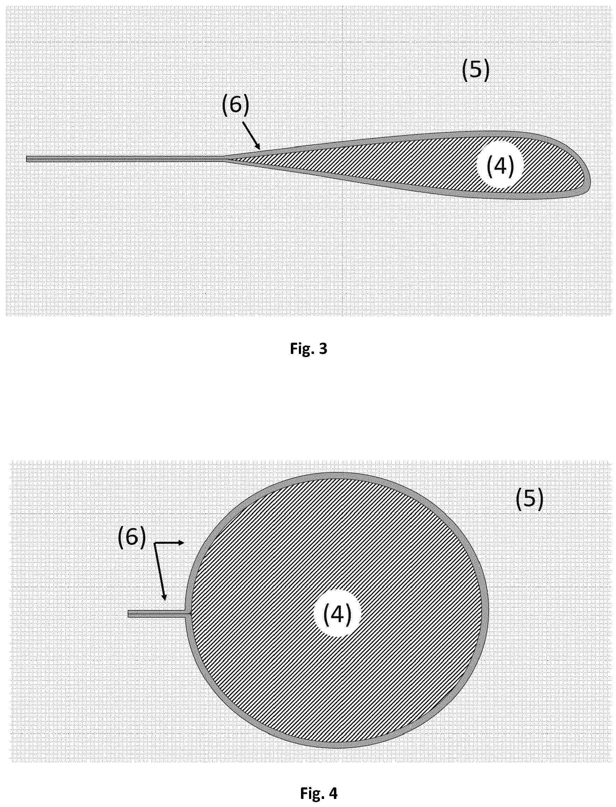

The flexible sealing element **2 (****Figure 2****,** **Figure 3****)** is an elastic material that has an extremely high deformability, like a foam or other advanced microscopically sealing elastic material that can again sustain very small radius of curvature without changing significantly the natural cross section shape (EPDM, Neoprene, Rubber, Silicone). It keeps the initial properties and shape after repetitive bend and it can fill and adapt to the rugosity of the surface in which it is being attached to, delivering a much tighter connection, without leaking. The system can have one or more vacuum cavities **3 (****Figure 1****),** each cavity is generated by adding one sealing element **2 (****Figure 1****)** between two existing flexible elements. The possibility of having multiple cavities creates a redundancy in case of water ingression, once that water would need to cross more than two barriers to arrive on the work area. Apart from this, the multiple cavities could be used, but not necessarily, to better manage the deformed shape under vacuum, allowing it to be less concave and the suction cavity cross section area to be just slightly reduced when compared to the initial shape, due to various supports along the span direction of the support band. This disclosure can sustain shape changes with extremely low bending radius, smaller than 20 mm, permitting that this solution embodies a real interface between a habitat and a blade.

In an embodiment, the support band **1** can be produced from the same material or be an assembly of elements, built by more than one material, that deliver orthotropy properties. These properties are achieved by adding materials with different properties. For example, a flexible membrane band that allows bending around the longitudinal axis of the sealing system and discrete stiffening elements bonded with some regular spacing that restrict bending displacement around the transversal axis, avoiding loss of function or choke under vacuum forces.

In an embodiment, the same concept of assembly of elements can be used for the complete sealing system, it can result from an extruded foam that has built in stiffeners, in this case the longitudinal flexibility is given by the foam properties and the transversal stiffness is given by a wireframe that is embedded on the foam. This frame, in particular, can be made by connecting a series of metallic tubes closely spaced in the transversal direction and connected on top and on bottom with two thin wires on the longitudinal direction.

The sealing, **Figure 1****,** is built by one or more suction cavities that create the necessary force to fix the sealing to the blade, acting as a strong interface. This interface can sustain large structural loads in any direction, namely roof weight, rain impact forces, water or snow weight and aerodynamic loads that are applied on the roof or floor need to be sustained by the sealing. The sealing can sustain thousands of newtons on all directions. The interface also avoids any water ingression on the interior part of the chamber. The cavities' volume can be expanded making the support band larger in the transverse direction, and the number of cavities can be increased by adding another sealing element. The added sealing elements are not necessarily in the same material as the top and bottom end **2 (****Figure 1****),** this difference allows the management of the transversal deformed shape under vacuum **1 (****Figure 1****)** and the adaptation of the friction coefficient of the complete sealing.

A skin or membrane **5,** **Figure 3** and **Figure 4****,** is then attached to the sealing, creating a roof that will cover the operators on top and make the water slide from the sealing to the outer perimeter of the habitat at an angle. The skin or membrane is also attached to the sealing below the suspended platform to create the desired floor enclosure of the complete platform on top and on bottom. The vertical attachment position of the membrane **5 (****Figure 1****)** into the support band may vary, as long as it does not compromise the efficiency of the assembly, although the middle position is considered to be, structurally, the more effective.

The sealing system length **6,** as shown on **Figure 3** and **Figure 4****.** is larger than the largest perimeter of the blade cross section to seal, this is the case to allow the sealing adaptation to the different blade shape perimeters.

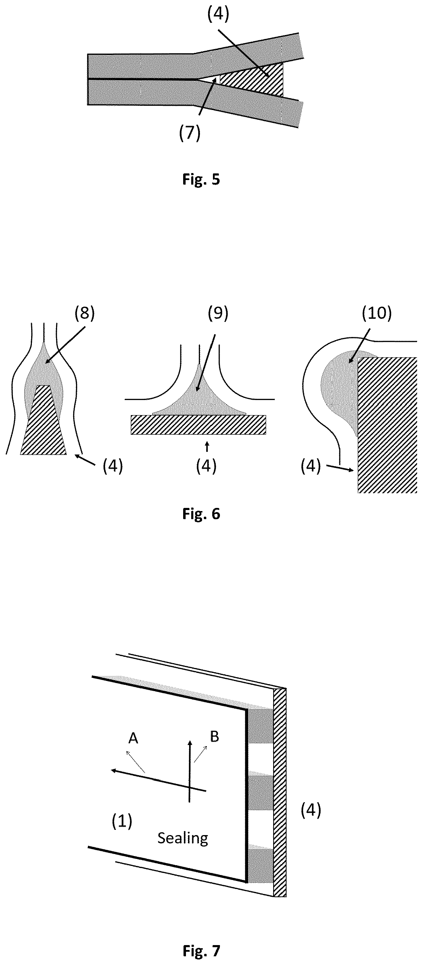

In an embodiment, the present disclosure can include add-on stoppers made of flexible and impermeable materials (foam, EPDM, silicone, Latex, etc.) with different shapes that have, but are not limited to, the following main functions: manage very low curvature radius and solve small gaps not accommodated by the baseline sealing device; surpass obstacles such as vortex generators, turbulators and others. These add-on stoppers can be used on the trailing edge gap **7 (****Figure 5****),** they can be used to close gaps when the two sides of the sealing meet with an angle close to 90°, and to increase locally the radius of curvature to one that is more compatible to the sealing radius limits. The Figure 6 show an example of three possible stoppers, one for the mating of the sealing strap around the trailing edge **8,** the other for the mating of the sealing strap when it makes close to 90 degrees angles with the blade surface **9,** and one to increase the bending radius locally **10.** These are mere examples of the shapes that can be used but the solution is not limited to them, as other variations can be used to solve any localized limitation of the sealing system.

In an embodiment, the sealing when in contact with the blade immediately creates a delta pressure on the vacuum cavity, starting from the suction pipe connection area and then propagating along the sealing longitudinal length. This is achieved due to a balance between suction system flow rate, pipe diameter and shape and finally, sealing cross section area.

This disclosure operates in a manner that in the beginning of the sealing installation by the operators the system produces higher flow rates with relatively low delta pressure, this is needed to accommodate some leaks that can happen here and there during the installation process. After having the sealing system fixed (small pressure differential along the full sealing) the suction system is commuted to a lower vacuum suction to increase the load carrying capability of the sealing. The delta pressure can be monitored along the full sealing to determine the suction level in different sealing areas and in this way control and monitor the system during the attachment process and operation. The ambient pressure and local pressure are also measured near the suction engines and near the connection of the suction pipe and the sealing device, to effectively control the desired pressure along the sealing device and piping.

This method of using two different vacuum systems allows the system to be easy to operate and have high performance in fixing speed and load carrying capability of the sealing.

The term "comprising" whenever used in this document is intended to indicate the presence of stated features, integers, steps, components, but not to preclude the presence or addition of one or more other features, integers, steps, components, or groups thereof.

## Claims

1. Sealing device for attaching and sealing against a wind turbine blade to perform maintenance, repair or inspection on said blade in an enclosed environment of a blade suspended platform, comprising:
a bendable support band (1) for attaching along a length of a flexible roof or floor membrane (5) for covering said enclosed environment;
two flexible longitudinal sealing elements (2) attached along a length of the support band for sealing against a surface of the wind turbine blade and for defining a longitudinal suction cavity (3) between the support band (1), the longitudinal sealing elements (2) and the blade (9),
**characterized in that** the bendable support band (1) is bendable around a transversal axis of the support band to conform to the blade cross sectional shape.

2. Sealing device according to the previous claim wherein the longitudinal sealing elements (2) and support band (1) are arranged to apply a negative relative pressure in the longitudinal cavity for fixing the sealing device to the surface of the blade (9) and supporting the roof or floor induced loads on the sealing.

3. Sealing device according to the previous claim wherein the longitudinal sealing elements (2) are arranged to be compressed under the negative relative pressure for sealing against the surface of the wind turbine blade.

4. Sealing device according to any of the previous claims comprising an air-tight connection for connecting between the longitudinal suction cavity (3) and a vacuum pump or turbine, in particular the air-tight connection being a suction pipe.

5. Sealing device according to any of the previous claims wherein the support band (1) is less bendable around a longitudinal axis of the support band than bendable around a transversal axis of the support band to sustain vacuum pressure and keeping the suction cavity open.

6. Sealing device according to any of the previous claims comprising an additional longitudinal sealing element (2), attached along a length of the support band (1), for sealing against the wind turbine blade and for defining an additional longitudinal suction cavity (3) between the support band, one of the two longitudinal sealing elements, the additional longitudinal sealing element, and the blade, in particular comprising a communicating channel between the first suction cavity and the additional suction cavity to allow pressure equalization between them.

7. Sealing device according to any of the previous claims comprising a roof or floor attached along the middle of the support band (1).

8. Sealing device according to any of the previous claims comprising one or more add-on stoppers for sealing gaps between the blade and the sealing device, in particular made with sealing foam, neoprene, silicone.

9. Blade repair platform comprising a sealing device according to any of the previous claims wherein the roof or floor membrane (5) is arranged to protect the enclosed environment from water or snow ingression, and entry of outside air.

10. Blade repair platform according to the previous claim wherein the sealing device, platform and roof, or floor, are arranged to surround a cross-section of the blade, in particular fully surrounding a cross-section of the blade.

11. Blade repair platform according to the previous claim wherein the sealed environment is arranged to provide a positive differential air pressure in respect of the exterior of the wind turbine, in particular the sealed environment being air-tight.

12. Method for applying a sealing device for sealing against a wind turbine blade to perform maintenance, repair or inspection on said blade in an enclosed environment of a blade repair platform, said device being according to any of the claims 1-8, the method comprising: fitting two flexible longitudinal sealing elements (2) attached along the a length of the support band (1) for sealing against the wind turbine blade and for defining a longitudinal suction cavity between the support band (1), said longitudinal sealing elements (2) and the blade.

13. Method according to the previous claim, further comprising using an air-tight connection to connect between the suction cavity (3) and a vacuum pump or turbine for applying a negative relative pressure for fixing the sealing device to the blade.

14. Method according to any of the claims 12-13 further comprising, for installing the sealing device, the steps of:
applying a first flow rate with a first pressure for accommodating leaks and fixing of the sealing device;
when the sealing device is fixed to the blade, applying a second flow rate with a second pressure for increasing load carrying capability of the sealing device;
wherein the first flow rate is higher than the second flow rate, and the first pressure is lower than the second pressure.

## Patentansprüche

1. Dichtungsvorrichtung zum Anbringen und Abdichten einer an einem Flügel einer Windenergieanlage aufgehängten Plattform zur Durchführung von Wartungs-, Reparatur-oder Inspektionsarbeiten an dem genannten Flügel in einer geschlossenen Umgebung, umfassend:
ein biegbares Stützband (1) zum Anbringen entlang einer Länge einer flexiblen Dach- oder Bodenmembran (5) zum Abdecken der genannten geschlossenen Umgebung;
zwei flexible Längsdichtungselemente (2), die entlang einer Länge des Stützbandes zum Abdichten gegen eine Oberfläche des Flügels der Windenergieanlage und zum Begrenzen eines sich in Längsrichtung erstreckenden Ansaughohlraums (3) zwischen dem Stützband (1), den Längsdichtungselementen (2) und dem Flügel (9) angebracht sind,
**dadurch gekennzeichnet, dass** das biegsame Stützband (1) um eine Querachse des Stützbandes biegbar ist, um sich an die Querschnittsform des Flügels anzupassen.

2. Dichtungsvorrichtung nach dem vorangehenden Anspruch, wobei die Längsdichtungselemente (2) und das Stützband (1) so angeordnet sind, dass sie einen relativen Unterdruck in dem Längshohlraum ausüben, um die Dichtungsvorrichtung an der Oberfläche des Flügels (9) zu fixieren und die dach- oder bodenseitig auf die Dichtung einwirkenden Lasten zu tragen.

3. Dichtungsvorrichtung nach dem vorangehenden Anspruch, wobei die Längsdichtungselemente (2) so angeordnet sind, dass sie durch den relativen Unterdruck zusammengedrückt werden, um gegen die Oberfläche des Flügels der Windenergieanlage abzudichten.

4. Dichtungsvorrichtung nach einem der vorangehenden Ansprüche, umfassend einen luftdichten Anschluss für den Anschluss zwischen dem sich in Längsrichtung erstreckenden Ansaughohlraum (3) und einer Vakuumpumpe oder -turbine, wobei der luftdichte Anschluss insbesondere ein Saugrohr ist.

5. Dichtungsvorrichtung nach einem der vorangehenden Ansprüche, wobei das Stützband (1) weniger um eine Längsachse des Stützbandes als um eine Querachse des Stützbandes biegbar ist, um den Vakuumdruck aufrechtzuerhalten und den Ansaughohlraum offen zu halten.

6. Dichtungsvorrichtung nach einem der vorangehenden Ansprüche, umfassend ein zusätzliches Längsdichtungselement (2), das entlang einer Länge des Stützbandes (1) angebracht ist, um gegen den Flügel der Windenergieanlage abzudichten und um einen zusätzlichen sich in Längsrichtung erstreckenden Ansaughohlraum (3) zwischen dem Stützband, einem der beiden Längsdichtungselemente, dem zusätzlichen Längsdichtungselement und dem Flügel zu begrenzen, insbesondere umfassend einen Verbindungskanal zwischen dem ersten Ansaughohlraum und dem zusätzlichen Ansaughohlraum, um einen Druckausgleich zwischen diesen zu ermöglichen.

7. Dichtungsvorrichtung nach einem der vorangehenden Ansprüche, umfassend ein Dach oder einen Boden, das bzw. der entlang der Mitte des Stützbandes (1) angebracht ist.

8. Dichtungsvorrichtung nach einem der vorhergehenden Ansprüche mit einer oder mehreren zusätzlichen Dichtungen zum Abdichten von Spalten zwischen dem Flügel und der Dichtungsvorrichtung, insbesondere bestehend aus Dichtungsschaum, Neopren oder Silikon.

9. Reparaturplattform für einen Flügel, umfassend ein Dichtungsvorrichtung nach einem der vorangehenden Ansprüche, wobei die Dach- oder Bodenmembran (5) so angeordnet ist, dass sie den umschlossenen Bereich vor dem Eindringen von Wasser oder Schnee und dem Eindringen von Außenluft schützt.

10. Reparaturplattform für einen Flügel nach dem vorangehenden Anspruch, wobei die Dichtungsvorrichtung, die Plattform und das Dach oder der Boden so angeordnet sind, dass sie einen Querschnitt des Flügels umgeben, insbesondere einen Querschnitt des Flügels vollständig umgeben.

11. Reparaturplattform für einen Flügel nach dem vorangehenden Anspruch, wobei der abgedichtete Bereich so beschaffen ist, dass er einen positiven Differenzluftdruck in Bezug auf das Äußere der Windturbine bereitstellt, wobei insbesondere der abgedichtete Bereich luftdicht ist.

12. Verfahren zum Anbringen einer Dichtungsvorrichtung zum Abdichten gegen einen Flügel einer Windenergieanlage zur Durchführung von Wartungs-, Reparatur- oder Inspektionsarbeiten an dem genannten Flügel in einem umschlossenen Bereich einer Reparaturplattform des Flügels, wobei die genannte Vorrichtung einem der Ansprüche 1-8 entspricht, wobei das Verfahren umfasst: Anbringen von zwei flexiblen Längsdichtungselementen (2), die entlang einer Länge des Stützbandes (1) befestigt sind, um gegen den Flügel der Windenergieanlage abzudichten und um einen sich in Längsrichtung erstreckenden Ansaughohlraum zwischen dem Stützband (1), den genannten Längsdichtungselementen (2) und dem Flügel zu begrenzen.

13. Verfahren nach dem vorangehenden Anspruch, ferner umfassend die Verwendung eines luftdichten Anschlusses zwischen dem Ansaughohlraum (3) und einer Vakuumpumpe oder -turbine zum Anlegen eines relativen Unterdrucks zur Befestigung der Dichtungsvorrichtung an dem Flügel.

14. Verfahren nach einem der Ansprüche 12-13, ferner umfassend die folgenden Schritte zur Montage der Dichtungsvorrichtung:
Anlegen einer ersten Durchflussmenge mit einem ersten Druck zur Aufnahme der Leckage und zur Fixierung der Dichtungsvorrichtung;
nach dem Fixieren der Dichtungsvorrichtung an dem Flügel, Anlegen einer zweiten Durchflussmenge mit einem zweiten Druck zur Erhöhung der Tragkraft der Dichtungsvorrichtung;
wobei die erste Durchflussmenge höher ist als die zweite Durchflussmenge und der erste Druck niedriger ist als der zweite Druck.

## Revendications

1. Dispositif d'étanchéité destiné à être attaché et scellé contre une pale d'éolienne pour effectuer la maintenance, réparation ou inspection de ladite pale dans un environnement clos d'une plateforme suspendue à une pale, comprenant :
une bande de support pliable (1) destinée à être attachée le long d'une membrane de toit ou de sol flexible (5) pour recouvrir ledit environnement clos ;
deux éléments d'étanchéité longitudinaux flexibles (2) attachés le long de la bande de support pour la sceller contre une surface de la pale d'éolienne et pour définir une cavité d'aspiration longitudinale (3) entre la bande de support (1), les éléments d'étanchéité longitudinaux (2) et la pale (9),
**caractérisé en ce que** la bande de support pliable (1) peut être pliée autour d'un axe transversal de la bande de support pour s'adapter à la forme de section transversale de la pale.

2. Dispositif d'étanchéité selon la revendication précédente dans lequel les éléments d'étanchéité longitudinaux (2) et la bande de support (1) sont arrangés pour appliquer une pression relative négative sur la cavité longitudinale pour fixer le dispositif d'étanchéité à la surface de la pale (9) et supporter les charges induites par le toit ou sol sur le scellage.

3. Dispositif d'étanchéité selon la revendication précédente dans lequel les éléments d'étanchéité longitudinaux (2) sont arrangés pour être comprimés sous la pression relative négative pour être scellés contre la surface de la pale d'éolienne.

4. Dispositif d'étanchéité selon l'une quelconque des revendications précédentes comprenant une liaison hermétique pour relier la cavité d'aspiration longitudinale (3) et une pompe à vide ou turbine, la liaison hermétique étant en particulier une conduite d'aspiration.

5. Dispositif d'étanchéité selon l'une quelconque des revendications précédentes dans lequel la bande de support (1) est moins pliable autour d'un axe longitudinal de la bande de support que pliable autour d'un axe transversal de la bande de support pour maintenir la pression de vide et maintenir la cavité d'aspiration ouverte.

6. Dispositif d'étanchéité selon l'une quelconque des revendications précédentes comprenant un élément d'étanchéité longitudinal supplémentaire (2), attaché le long de la bande de support (1), pour être scellé contre la pale d'éolienne et pour définir une cavité d'aspiration longitudinale supplémentaire (3) entre la bande de support, un des deux éléments d'étanchéité longitudinaux, l'élément d'étanchéité longitudinal supplémentaire, et la pale, comprenant un particulier un canal de communication entre la première cavité d'aspiration et la cavité d'aspiration supplémentaire pour permettre une égalisation de pression entre elles.

7. Dispositif d'étanchéité selon l'une quelconque des revendications précédentes comprenant un toit ou sol attaché le long du milieu de la bande de support (1).

8. Dispositif d'étanchéité selon l'une quelconque des revendications précédentes comprenant un ou plusieurs bouchons complémentaires pour sceller les espaces entre la pale et le dispositif d'étanchéité, faits en particulier en mousse d'étanchéité, néoprène, silicone.

9. Plateforme de réparation de pale comprenant un dispositif d'étanchéité selon l'une quelconque des revendications précédentes dans laquelle la membrane de toit ou de sol (5) est arrangée pour protéger l'environnement clos contre la pénétration d'eau et de neige, et l'entrée d'air venant de l'extérieur.

10. Plateforme de réparation de pale selon la revendication précédente dans laquelle le dispositif d'étanchéité, la plateforme et le toit, ou sol, sont arrangés pour entourer une section transversale de la pale, en particulier entourer complètement une section transversale de la pale.

11. Plateforme de réparation de pale selon la revendication précédente dans laquelle l'environnement scellé est arrangé pour fournir une pression d'air différentielle positive par rapport à l'extérieur de l'éolienne, l'environnement scellé étant en particulier hermétique.

12. Procédé destiné à l'application d'un dispositif d'étanchéité pour le sceller contre une pale d'éolienne pour la réalisation de la maintenance, réparation ou inspection sur ladite pale dans un environnement clos d'une plateforme de réparation de pale, ledit dispositif étant selon l'une quelconque des revendications 1-8, le procédé comprenant : la mise en place de deux éléments d'étanchéité longitudinaux flexibles (2) attachés le long d'une bande de support (1) destinés à être scellés contre la pale d'éolienne et à définir une cavité d'aspiration longitudinale entre la bande de support (1), lesdits éléments d'étanchéité longitudinaux (2) et la pale.

13. Procédé selon la revendication précédente, comprenant également l'utilisation d'une liaison hermétique pour relier la cavité d'aspiration (3) et une pompe à vide ou turbine pour appliquer une pression relative négative pour fixer le dispositif d'étanchéité à la pale.

14. Procédé selon l'une quelconque des revendications 12-13 comprenant également, pour installer le dispositif d'étanchéité, les étapes consistant à :
appliquer un premier débit avec une première pression pour recevoir des fuites et réparer le dispositif d'étanchéité ;
lorsque le dispositif d'étanchéité est fixé à la pale, appliquer un second débit avec une seconde pression pour augmenter la capacité de charge du dispositif d'étanchéité ;
dans lequel le premier débit est plus élevé que le second débit, et la première pression est inférieure à la seconde pression.
